# EUROPEAN PATENT APPLICATION

(11) **EP 4 521 200 A1**
(43) Date of publication of application: **12.03.2025**
(21) Application number: 24199120.7
(22) Date of filing: 09.09.2024
(51) Int. Cl.: G06F 1/3206, G06F 1/324, G06F 1/3296, H04L 43/0876

(54) **POWER OPTIMIZATION OF A COMPUTING SYSTEM**

(30) Priority: 11.09.2023 IN 202341060876; 28.08.2024 US 202418818180
(71) Applicant: Juniper Networks, Inc., Sunnyvale, CA 94089 (US)
(72) Inventor: GHOSH, Sandip Kumar, Sunnyvale, 94089 (US); SUNKADA, Ganesh, Sunnyvale, 94089 (US); JAIN, Kapil, Sunnyvale, 94089 (US); KOMMULA, Raja, Sunnyvale, 94089 (US); YAVATKAR, Raj, Sunnyvale, 94089 (US)
(74) Representative: D Young & Co LLP

(57) **Abstract**

This disclosure describes techniques for improving and/or reducing the power consumption by a router or other computing system. For example, this disclosure describes determining, by a computing system, an expected scale of a network device relative to a maximum scale of the network device; and adjusting, by the computing system and based on a comparison of the expected scale to the maximum scale, power consumption of the network device.

## Description

### CROSS REFERENCE

This application claims the benefit of US Patent Application No. 18/818,180, filed 28 August 2024, which claims the benefit of India Provisional Application No. 202341060876 filed September 11, 2023, the entire content of each application is hereby incorporated by reference.

### TECHNICAL FIELD

This disclosure relates to computer networks and, more specifically, to improving energy efficiency in computer networks.

### BACKGROUND

A computer network is a collection of interconnected network devices that can exchange data and share resources. In a packet-based network, such as an Ethernet network, the network devices communicate data by dividing the data into variable-length blocks called packets, which are individually routed across the network from a source device to a destination device. The destination device extracts the data from the packets and assembles the data into its original form.

Certain network devices or nodes, such as routers, maintain routing information that describes routes through the network. Routers often have many CPU cores and a significant amount of memory to support various tasks, such as management of the control plane and routing packets. In some cases, a router may have more than one hundred CPU cores and many hundreds of gigabytes of random access memory.

As enterprise networks, service provider networks, other types of networks, and data centers become larger, energy usage increases. Some large data centers require a significant amount of power, enough to power many homes simultaneously. Data centers may also run application workloads that are compute and data intensive, such as crypto mining and machine learning applications, and consume a significant amount of energy. To be more energy efficient, some networks may source energy from renewable energy sources. However, the configuration of networks, data centers, and/or the applications that run on such networks are constantly changing and networks are often unable to dynamically increase their energy efficiency.

### SUMMARY

This disclosure describes techniques for improving and/or reducing the power consumption by a router or other computing system in a network. In particular, techniques described herein may help manage power in a computing system to ameliorate inefficiencies stemming from routers or other network devices that are overbuilt for current needs. In some examples, a computing system may "offline" (e.g., transition into a power conservation mode) individual CPU cores within a router or reduce the frequency at which the cores within a router are clocked in appropriate circumstances. A computing system may also offline individual memory modules in appropriate circumstances, which will also normally translate into reduced power consumption by the router.

In some examples, this disclosure describes operations performed by a computing system in accordance with one or more aspects of this disclosure. In one specific example, this disclosure describes a method comprising determining, by a computing system, an expected scale of a network device relative to a maximum scale of the network device; and adjusting, by the computing system and based on a comparison of the expected scale to the maximum scale, power consumption of the network device.

In another example, this disclosure describes a system comprising a storage system and processing circuitry having access to the storage system, wherein the processing circuitry is configured to carry out operations described herein. In yet another example, this disclosure describes a computer-readable storage medium comprising instructions that, when executed, configure processing circuitry of a computing system to carry out operations described herein.

This Summary is intended to provide a brief overview of some of the subject matter described in this document. Accordingly, the above-described features are merely examples and should not be construed to narrow the scope or spirit of the subject matter described herein. Other features, objects, and advantages of the disclosure will be apparent from the description and drawings, and from the claims.

### BRIEF DESCRIPTION OF DRAWINGS

FIG. 1A is a block diagram of a router that might be used in an edge deployment for an enterprise network, service provider network, or other network.
FIG. 1B is a block diagram illustrating an example network system having a data center in which techniques described herein may be implemented.
FIG. 2 is a flow diagram illustrating operations performed by an example power management controller in accordance with one or more aspects of the present disclosure.
FIG. 3 is a flow diagram illustrating operations performed by an example power management controller in accordance with one or more aspects of the present disclosure.
FIG. 4 is a flow diagram illustrating operations performed by an example router in accordance with one or more aspects of the present disclosure.

### DETAILED DESCRIPTION

Network devices deployed in a network are often underutilized, and as a result, such devices might use only a fraction of the number of available CPUs, cores, or memory. The number of cores and memory considered necessary in a router can be calculated by determining the maximum documented scale of the router (e.g., in terms of the number of stored routes or in terms of hardware attributes), the best possible convergence under multi-dimensional configuration and large scale, and headroom for future growth. These considerations tend to result in a router that is overbuilt for current needs (since cores and memory cannot be easily added later) and tend to result in a router designed to accommodate the future worst-case scenario over the router's approximately seven-year lifespan.

Not all deployed routers need to be configured at the maximum possible scale, however, since different user environments will have different networks and different needs. Some will never reach the expected high-use scale. Further, in greenfield deployments, usage levels or scales are expected to be lower during initial time periods and then increase gradually. If a scaling requirement of a deployment is 50% of the maximum, it might not be necessary for all cores to be used and for all cores to be running at maximum frequency. Similarly, not all of the memory modules may be needed. However, a core always consumes power (including when it is idle), and the same is true for memory modules (e.g., DRAM DIMMs). Accordingly, a network administrator or owner makes capital expenditures for a router (often with more cores and memory than needed) and continues to pay for it through operating expenses and power costs. Running all cores and running them at maximum frequency when the scale is lower than the maximum results in wastage of power. In a cloud environment, resources (CPU, RAM, etc.) can be added as and when necessary. Yet routers are often deployed in a relatively fixed environment (e.g., in an on-premises enterprise network), and they are therefore over-provisioned because adding components to the router might not be possible in the future.

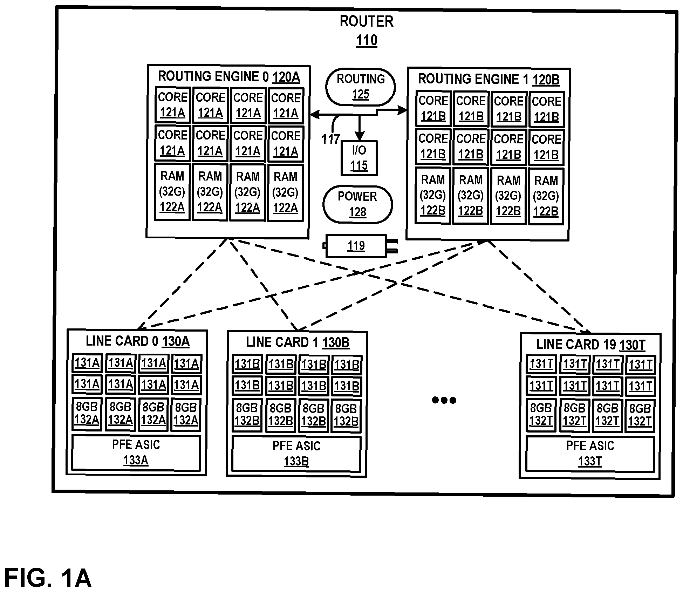

FIG. 1A illustrates a block diagram of a router that might be used in an edge deployment for an enterprise network, service provider network, or other network. In FIG. 1A, router 110 includes two routing engines (e.g., primary routing engine 120A and secondary routing engine 120B), along with twenty line cards 130A through 130T (collectively, "line cards 130"). More or fewer routing engines and/or line cards may be used in other examples. Although FIG. 1A illustrates a router, the device or system illustrated in FIG. 1A and/or in other illustrations herein could be a switch or other type of network device. Accordingly, although at least some examples herein are described in terms of a router, techniques in accordance with aspects of the present disclosure may also apply to any type of network device.

Router 110 also includes power source 119, one or more I/O devices 115, one or more processors (not specifically shown in FIG. 1A), routing module 125, and power management module 128. Routing module 125 may perform routing functions traditionally performed by a router. And as described herein, power management module 128 may perform certain energy management and/or conservation operations. One or more of the devices, modules, storage areas, or other components of router 110 may be interconnected to enable inter-component communications (physically, communicatively, and/or operatively). In some examples, such connectivity may be provided by through communication channels (e.g., communication channels 117), a system bus, a network connection, an inter-process communication data structure, or any other method for communicating data.

In FIG. 1A, each routing engine 120 includes multiple processor cores and multiple memory modules. Specifically, in the example of FIG. 1A, routing engine 120A of router 110 includes one or more processors or local processing units, each represented by the cores 121A illustrated in FIG. 1A. In the example of FIG. 1A, routing engine 120A might have a single processor having eight cores ("cores 121A"). More processors might be used in other examples. Routing engine 120A also includes local memory for use by the processing unit(s), which in a typical example might include four 32 gigabyte random access memory modules (each labeled "RAM 122A").

In the example of FIG. 1A, routing engine 120B is equipped in a manner similar to (or the same as) routing engine 120A, and also includes a processor equipped with eight processor cores ("cores 121B") and four memory modules ("RAM 122B"). In some examples, routing engine 120A may serve as the primary routing engine for router 110, with routing engine 120B serving as a redundancy backup. Therefore, although illustrated with two routing engines 120, router 110 may, in other examples, include only a single routing engine 120. In some examples, however, router 110 might possibly have more than two routing engines 120. Cores 121 within routing engines 120 may manage protocol sessions with one or more network peer devices, manage routing tables or data, and/or operate pursuant to various routing protocols.

Each of line cards 130 included within router 110 also typically include multiple processing cores and multiple memory modules. In the example shown in FIG. 1A, each of line cards 130 include eight processor cores (e.g., cores 131A in line card 130A and eight cores 131 in each of line cards 130B through 130T). Similarly, each of line cards 130 may include, in a typical example, four 8 gigabyte memory modules (e.g., four memory modules 132A in line card 130A and four memory modules 132 in each of line cards 130B through 130T).

Configured as illustrated, router 110 of FIG. 1A includes a total of 176 cores (16 total in routing engines 120, and another 160 total across twenty line cards 130A through 130T). In addition, router includes 896 gigabytes of memory (256 Gb total in routing engines 120, and another 640 Gb total across twenty line cards 130A through 130T).

Each of line cards 130 may include a forwarding component, such as a packet forwarding engine ASIC 133 (e.g., PFE ASIC 133A is included within line card 130A, and each of line cards 130B through 130T also include corresponding PFE ASICs 133). PFE ASICs 133 may perform packet forwarding services on behalf of router 110. Cores 131 executing within each of line cards 130 may manage each of the PFE ASICs 133 and/or perform control plane functions. Routing engines 120 within router 110 are coupled to each of line cards 130 through an internal switch fabric or other communications means.

Power source 119 may provide power to one or more components of router 110. Power source 119 may receive power from the primary alternating current (AC) power supply in a data center, building, or other location. In other examples, power source 119 may be a battery or a device that supplies direct current (DC). In still further examples, router 110 and/or power source 119 may receive power from another source. One or more of the devices or components illustrated within router 110 may be connected to power source 119, and/or may receive power from power source 119. Power source 119 may have intelligent power management or consumption capabilities, and such features may be controlled, accessed, or adjusted by one or more modules of router 110 (e.g., power management module 128) and/or by one or more cores 121 and/or 131 to intelligently consume, allocate, supply, or otherwise manage power.

One or more cores 121 and cores 131 may implement functionality and/or execute instructions associated with router 110 or associated with one or more modules illustrated herein and/or described below. One or more cores 121 and/or 131 may be, may be part of, and/or may include processing circuitry that performs operations in accordance with one or more aspects of the present disclosure. Cores 121 and/or 131 may be included within various types of processing hardware, which may include microprocessors, application processors, display controllers, auxiliary processors, one or more sensor hubs, and any other hardware configured to function as a processor, a processing unit, or a processing device. Router 110 may use one or more of cores 121 or 131 to perform operations in accordance with one or more aspects of the present disclosure using software, hardware, firmware, or a mixture of hardware, software, and firmware residing in and/or executing within router 110.

One or more I/O devices 115 may communicate with routing engines 120 (or line cards 130) to control or perform various routing operations. In general, I/O devices 115 may represent any input or output devices of router 110 not otherwise separately described herein.

Router 110 may include one or more operating system kernels that provide an execution environment for execution of various software or modules included within router 110. In general, cores 121 or 131 may access stored instructions and/or data and execute such instructions and/or modules of router 110 or routing engines 120A or 120B. Such modules may be implemented as software but may in some examples include any combination of hardware, firmware, and software. Further, some modules may execute within kernel space, while others may execute within user space or non-kernel space. The combination of cores 121 and 131 and storage devices (e.g., memory modules 122 and 132) may retrieve, store, and/or execute the instructions and/or data of one or more applications, modules, or software.

In accordance with one or more aspects of the techniques described in this disclosure, power management module 128 of router 110 may perform one or more actions to improve energy efficiency of router 110. In some examples, power management module 128 determines information about energy needs of the router 110 and adjusts the operation of the router 110 to improve its energy efficiency. In some examples, power management module 128 may be configured to determine the energy efficiency of specific devices within router 110, and/or manage or control certain aspects of how router 110 operates and/or consumes power.

As described herein, it may be possible to manage power in a computing system to ameliorate inefficiencies stemming from routers overbuilt for current needs. In some cases, for example, it is possible, through software or other methods, to "offline" (e.g., transition into a power conservation mode) individual cores 121 and/or cores 131 within router 110. It may also be possible to reduce the frequency at which such cores are clocked. Normally, lower clock speeds translate into reduced power consumption by the router. Further, it may also be possible (also through software as represented by power management module 128) to offline individual memory modules 122 and 132. Offlining such memory modules (e.g., using a power conservation mode) will also normally translate into reduced power consumption by the router.

A number of processes or methods may be employed to reduced power consumption. In the first method, which may be user-driven, involves the user setting the expected number of the available cores that will be used by the router, such as in terms of a percentage of the maximum scale. In this sense, the user adjusts a configuration knob or dial (e.g., by manually configuring router 110) that is used for adjusting the expected number of cores to be used and/or the expected number of memory modules that may be used.

In such an example, one or more I/O devices 115 detects input and outputs information about the input to power management module 128. Power management module 128 determines that the input includes information about the expected number of cores that will be used by router 110. Alternatively, or in addition, power management module 128 determines that the input includes information about the expected number of memory modules that will be used by router 110. In response to such information, power management module 128 offlines one or more processors or cores and/or offlines one or more memory modules. (In some cases, power management module 128 may, based on the input, bring one or more processors, cores, and/or memory modules out of an offlined state.)

In a second method, power management module 128 determines and/or detects the scale of the cores 121 and 131 (or CPUs) within router 110 and determines and/or detects the scale of the memory modules 122 and 132 needed by router 110 for current and/or expected operations. Power management module 128 then interacts with components within router 110 to offline a subset of the cores, reduce the frequency of the cores, and/or offline a subset of the memory modules, as per the determined or detected scale by the power management module 128. In some examples, power management module 128 may interact with such components to "online," or bring them out of an offline state (e.g., where power management module 128 previously offlined such components based on a prior forecast of expected needs).

In a third method, a machine learning algorithm is trained to predict the appropriate scale for the number of cores to offline, the frequency at which to clock the cores, and/or the number of memory modules to offline. In some examples, the model is trained based on historical data about the router's scale and switching operations, CPU utilization, core utilization, memory utilization, and/or the router's configuration. The trained model is then applied by power management module 128 to determine the appropriate scale, and then translates that scale into information about the appropriate number of cores to offline, the frequency at which to clock the cores, and/or the number of memory modules to offline. Once such a determination is made, components within router 110 are adjusted (e.g., through offlining techniques or frequency reduction) based on the determination.

With each method, the power management module 128 (or an administrator or user) may be able to select the method(s) of power management and/or optimization, which may involve offlining cores, reducing clock frequency, and/or offlining memory modules. The power management module 128 may enable/disable these power management features globally (or per-chassis) or on a per-router component basis.

The techniques applied by power management module 128 may be both revertive and dynamic. For example, power management module 128 may be capable of making adjustments so that the CPU cores or frequency may increase with any upward system scale change. Similarly, power management module 128 may be capable of ensuring that the memory modules used also increase with the upward change of system scale. In general, the CPU cores (or frequency) and memory module usages will go up or down dynamically with the system's scale.

In an example, router 110 may be deployed in an enterprise network, and power management module 128 may determine that the current route and protocol scale of the deployment is, for example, 40% of the maximum supported scale of router 110. Applying the user-driven method described above, and in one illustrative example, the user may set the scale at 50% of the routers, having allocated 10% headroom. Accordingly, based on these settings, power management controller 28 may determine that the frequency of the cores should be reduced by 50%. Alternatively, or in addition, power management controller 28 may determine that 50% of the 176 cores should be offlined. Alternatively, or in addition, power management controller 28 may determine that 50% (or any other appropriate amount, depending on the example) of the available 896 gigabytes of memory should be offlined (e.g., two of the four memory modules 122A, two of the four memory modules 122B, and 40 of the 80 memory modules 132A through 132T). In examples where the deployment needs may increase over time, power management module 128 may proportionally activate or online new cores, proportionally increase clock frequency, and/or proportionally activate/online memory modules.

Although a scale of 50% is chosen in the described example when the determined scale is 40% of maximum supported scale of router 110, any other appropriate scale may be chosen. Also, in other examples, power management module 128 may determine that the current router and protocol scale of the deployment is a different percentage (any appropriate "X%" of the maximum supported scale of router 110), and such differing percentages may result in a different chosen scale based on the X% value.

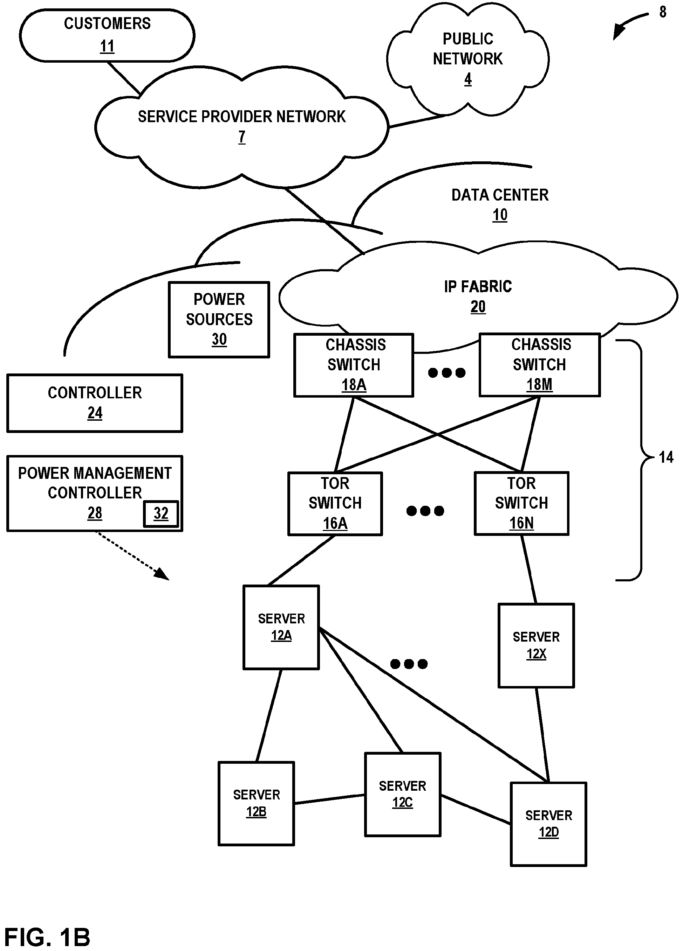

FIG. 1B is a block diagram illustrating an example system 8 in which examples of the techniques described herein may be implemented in a data center 10. Although FIG. 1A is described in terms of an edge deployment of router 110 in an enterprise network, techniques described herein may apply in other contexts, such as in a service provider network or in a data center environment. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies (e.g., power source(s) 30), and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1B, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In the example illustrated in FIG. 1B, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") routers or switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Techniques described herein may apply to any of these systems or devices.

In the example illustrated in FIG. 1B, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

Power management controller 28 may manage aspects of how various network devices within fabric 14 consume power. Power management controller 28 may communicate information describing power usage, power capacity, expected capacity, and/or other aspects of power consumption to an orchestration system (not shown) or network controller 24. Example orchestration systems include OpenStack, vCenter by VMWARE, or System Center by MICROSOFT. Example network controllers 24 include a controller for Apstra, Paragon, Mist, or Contrail by JUNIPER NETWORKS or Tungsten Fabric.

In accordance with one or more aspects of the techniques described in this disclosure, power management controller 28 may invoke one or more actions to improve energy efficiency of data center 10. In some examples, power management controller 28 determines information about energy needs of one or more devices (e.g., switches 16 and 18) within fabric 14 (or devices within data center 10 generally) and adjusts the operation of such devices to improve energy efficiency of data center 10. In some examples, power management controller 28 may include an energy efficiency module 32 configured to determine the energy efficiency of devices within the data center (or the data center generally), manage power consumption of devices within the data center, and/or manage or control certain aspects of how devices operate within the data center that affect power consumption.

As previously described, it may be possible to manage power in a computing system to ameliorate inefficiencies stemming from network devices overbuilt for current needs to, through software or other methods, "offline" individual CPU cores within devices within data center 10 and/or reduce the frequency at which the cores are clocked. Normally, lower clock speeds translate into reduced power consumption by the devices within data center 10. Further, it is possible, also through software, to offline individual memory modules (e.g., using a power conservation mode) which will also normally translate into reduced power consumption by the devices within data center 10.

As previously described, a number of different processes or methods may be employed to reduced power consumption, and the three methods described in connection with FIG. 1A may also apply in the context of FIG. 1B. In the first user-driven method, the user sets the expected number of the available cores that will be used by the network device, such as in terms of a percentage of the maximum scale. In this sense, the user adjusts a configuration knob or dial (e.g., by manually configuring a network device or one of switches 16 or 18) that is used for adjusting the expected number of cores to be used. Similarly, the user determines and sets the expected number of memory modules that may be used.

In the second method, power management controller 28 (e.g., energy efficiency module 32) determines and/or detects the scale of the CPUs and/or memory modules needed for current and/or expected operations for a given router or network device (e.g., including, but not necessarily limited to one or more of switches 16 or 18) in data center 10. Power management controller 28 then interacts with the network device to offline a subset of the cores, reduce the frequency of the cores, and/or offline a subset of the memory modules, as per the determined or detected scale by the power management controller 28. In some examples, and as in FIG. 1A, this process is performed by the router or network device itself, rather than by power management controller 28 (e.g., module 32 may be included within a network device (e.g., within routers or switches 16 and 18) rather than within power management controller 28).

In the third method, a machine learning algorithm is trained to predict the appropriate scale for the number of cores to offline, the frequency at which to clock the cores, and/or the number of memory modules to offline. In some examples, the model is trained based on historical data about the network device's scale, switching or other operations, CPU, core, memory utilization, and/or the device's configuration. The trained model is then applied by power management controller 28 (or by a network device) to determine the appropriate scale for the number of cores to offline, the frequency at which to clock the cores, and/or the number of memory modules to offline. Once such a determination is made, the relevant network device is adjusted (e.g., through offlining techniques or frequency reduction) based on the determination.

With each method, the power management controller 28, the network device, or an administrator or user may be able to select the method(s) of power management and/or optimization, which may involve offlining cores, reducing clock frequency, and/or offlining memory modules. The power management controller 28, the network device, or the user may enable/disable these power management features globally (or per-chassis) or on a per-device component basis (e.g., on a field replaceable unit-basis).

As with the example described in connection with FIG. 1A, the proposed techniques may be both revertive and dynamic. For example, the CPU cores or frequency may increase with any upward system scale change. Similarly, the memory modules used may also increase with the upward change of system scale. In general, the CPU cores (or frequency) and memory module usages will go up or down dynamically with the system's scale.

In one example, a user may have multiple routers or switches deployed in a production network, such as that illustrated in FIG. 1B. Power management controller 28 determines that the current route and protocol scale of the deployment is, for example, 40% of a given router's maximum supported scale. Applying the user-driven method described above, the user sets the scale at 50% (or any other appropriate percentage, depending on the example) of the routers, having allocated 10% headroom. Accordingly, based on these settings, power management controller 28 may determine that the frequency of the cores should be reduced by 50%. Alternatively, or in addition, power management controller 28 may determine that 50% of the cores should be offlined. Alternatively, or in addition, power management controller 28 may determine that 50% of the memory modules should be offlined. And in examples where the deployment needs may increase over time, power management controller 28 may proportionally activate or online new cores, proportionally increase clock frequency, and/or proportionally activate/online memory modules.

Modules illustrated in FIG. 1A and FIG. 1B (e.g., routing module 125, power management module 128, energy efficiency module 32) and/or illustrated or described elsewhere in this disclosure may perform operations described using software, hardware, firmware, or a mixture of hardware, software, and firmware residing in and/or executing at one or more computing devices. For example, a computing device may execute one or more of such modules with multiple processors or multiple devices. A computing device may execute one or more of such modules as a virtual machine executing on underlying hardware. One or more of such modules may execute as one or more services of an operating system or computing platform. One or more of such modules may execute as one or more executable programs at an application layer of a computing platform. In other examples, functionality provided by a module could be implemented by a dedicated hardware device.

Although certain modules, data stores, components, programs, executables, data items, functional units, and/or other items included within one or more storage devices may be illustrated separately, one or more of such items could be combined and operate as a single module, component, program, executable, data item, or functional unit. For example, one or more modules or data stores may be combined or partially combined so that they operate or provide functionality as a single module. Further, one or more modules may interact with and/or operate in conjunction with one another so that, for example, one module acts as a service or an extension of another module. Also, each module, data store, component, program, executable, data item, functional unit, or other item illustrated within a storage device may include multiple components, sub-components, modules, sub-modules, data stores, and/or other components or modules or data stores not illustrated.

Further, each module, data store, component, program, executable, data item, functional unit, or other item illustrated within a storage device may be implemented in various ways. For example, each module, data store, component, program, executable, data item, functional unit, or other item illustrated within a storage device may be implemented as a downloadable or preinstalled application. In other examples, each module, data store, component, program, executable, data item, functional unit, or other item illustrated within a storage device may be implemented as part of an operating system executed on a computing device.

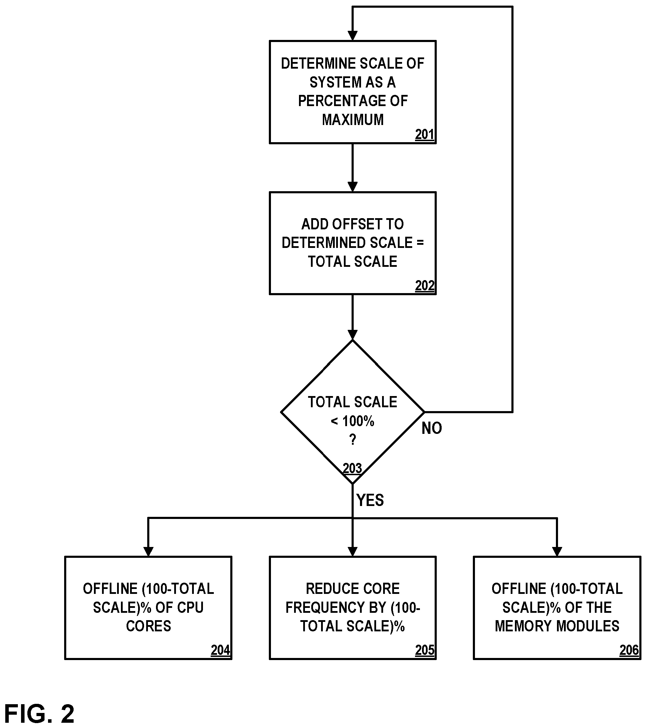

FIG. 2 is a flow diagram illustrating operations performed by an example power management controller 28 in accordance with one or more aspects of the present disclosure. FIG. 2 is described below within the context of power management controller 28 of FIG. 1B and may correspond to the first and second methods described above. In other examples, operations described in FIG. 2 may be performed by network devices themselves, or by one or more other components, modules, systems, or devices. Further, in other examples, operations described in connection with FIG. 2 may be merged, performed in a difference sequence, omitted, or may encompass additional operations not specifically illustrated or described.

In the process illustrated in FIG. 2, and in accordance with one or more aspects of the present disclosure, power management controller 28 may determine the scale of a network device as a percentage of the maximum scale (201). Power management controller 28 may add an offset to the determined scale (202). Power management controller 28 may determine whether the total scale (scale + offset) is less than 100% of the maximum scale of the network device (203). If the scale is at the maximum scale, power management controller 28 might not implement any power consumption adjustments for the network device. However, if the scale is less than the maximum scale, then power management controller 28 may implement one or more power consumption adjustments for the network device. Such adjustments may involve offlining a proportional percentage of CPU cores (204), reducing core clock frequency by a proportional percentage (205), and/or offlining a proportional percentage of memory modules (206).

In FIG. 2, and after performing one or more power consumption adjustments on the network device, power management system 28 may continue to monitor operations of the network device and perform updated scale calculations (e.g., return to 201). Based on these updated scale calculations, power management system 28 may perform further power consumption adjustments, which may involve offlining additional cores or memory modules or further reducing core frequency. However, where the updated scale calculations indicate an increasing scale, power management system 28 may perform power consumption adjustments that involve rolling back prior offlining of CPU cores and/or memory modules (i.e., activating CPU cores and/or activating memory modules) and/or increasing core clock frequency.

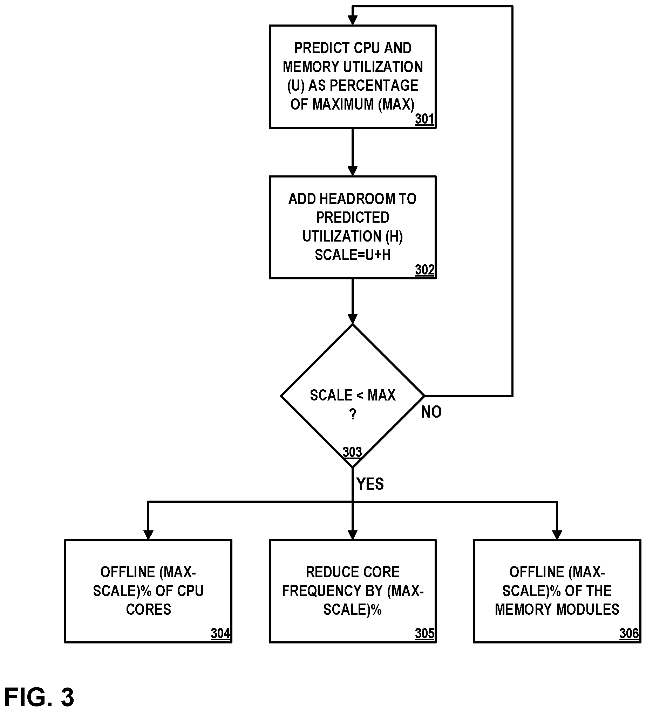

FIG. 3 is another flow diagram illustrating operations performed by an example power management controller 28 in accordance with one or more aspects of the present disclosure. FIG. 3 is, like FIG. 2, described below within the context of power management controller 28 of FIG. 1B. In other examples, operations described in FIG. 3 may be performed by network devices themselves, or by one or more other components, modules, systems, or devices. Further, in other examples, operations described in connection with FIG. 3 may be merged, performed in a difference sequence, omitted, or may encompass additional operations not specifically illustrated or described.

In the process illustrated in FIG. 3, and in accordance with one or more aspects of the present disclosure, power management controller 28 may use an artificially intelligent machine learning (AIML) model to predict the maximum CPU and/or memory (e.g., DRAM) utilization. In such an example, power management controller 28 may predict CPU and/or memory utilization as a percentage of the maximum utilization (301). The predicted utilization may be referred to as "U," and the maximum utilization may be referred to as "MAX."

Power management controller 28 may also add a headroom value ("H") to the predicted utilization to determine a "Scale" value (302). (In some examples, the machine learning model may include this headroom value in its prediction.)

Power management controller 28 may determine whether the predicted scale (predicted utilization + headroom) is less than the maximum utilization of the network device (303). If the scale is at the maximum scale, power management controller 28 might not implement any power consumption adjustments for the network device. However, if the scale is less than the maximum scale, then power management controller 28 may implement one or more power consumption adjustments for the network device. Such adjustments may involve offlining a proportional percentage of CPU cores (304), reducing core clock frequency by a proportional percentage (305), and/or offlining a proportional percentage of memory modules (306). (In some cases, particularly for offlining memory modules, it may not be possible to offline a fraction of a memory module. In that situation, power management controller 28 may offline the number of complete memory modules that is closest to the precisely calculated proportional percentage of memory modules.)

In FIG. 3, and after performing one or more power consumption adjustments on the network device, power management system 28 may continue to monitor operations of the network device and apply the machine learning module to make new predictions about scale (e.g., return to 301). Based on these updated scale values, power management system 28 may perform further power consumption adjustments, which may involve offlining additional cores or memory modules or further reducing core frequency. However, where the updated scale predictions suggest an increasing scale, power management system 28 may perform power consumption adjustments that involve rolling back prior offlining of CPU cores and/or memory modules (i.e., activating CPU cores and/or activating memory modules) and/or increasing core clock frequency.

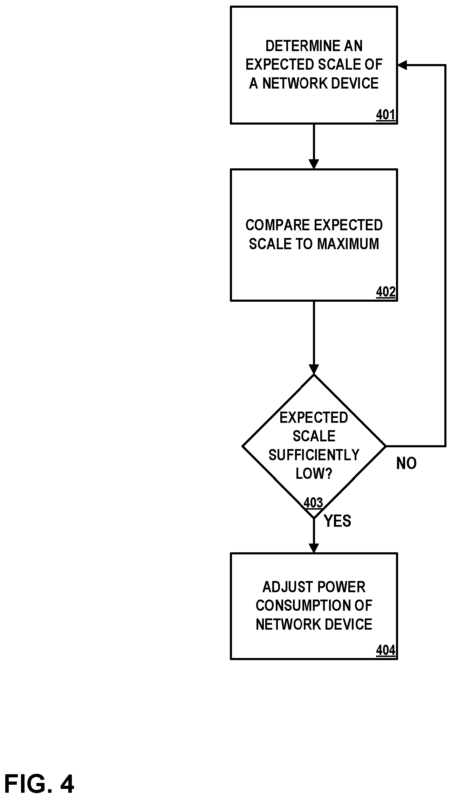

FIG. 4 is a flow diagram illustrating operations performed by an example network device in accordance with one or more aspects of the present disclosure. FIG. 4 is described below within the context of router 110 of FIG. 1A. In other examples, operations described in FIG. 4 may be performed by one or more other components, modules, systems, or devices. Further, in other examples, operations described in connection with FIG. 4 may be merged, performed in a difference sequence, omitted, or may encompass additional operations not specifically illustrated or described.

In the process illustrated in FIG. 4, and in accordance with one or more aspects of the present disclosure, a system may determine an expected scale of a network device (401). For example, with reference to FIG. 1A, power management module 128 of router 110 may determine an expected scale of router 110, based on current operations, environment, configuration, or other conditions. Alternatively, or in addition, power management module 128 of router 110 may determine an expected convergence under multi-dimensional configuration and large scale. In other words, how quickly a network will reconverge during any path failure is dependent on CPU and scale of router 110, and power management module may use information about convergence capabilities and/or attributes to determine the scale of the router 110.The system may compare the expected scale to a maximum scale of the network device (402). For example, power management module 128 of router 110 compares the expected scale to a maximum scale of the router 110 (e.g., where maximum scale could be based on the configurations or specifications of router 110). Power management module 128 may determine that the expected scale is sufficiently low such that one or more components will not be needed for the expected scale of operations performed by router 110. In this scenario, such components of the router can therefore be offlined, or the frequency at which at least some of the cores are clocked can be lowered (YES path from 403). In such an example, power management module 128 adjusts the power consumption of router 110, such as by lowering a clock frequency, or offlining one or more components of the router 110 (e.g., cores 121, 131 or modules 122, 132). Note that in some examples, if power management module 128 determines that the expected scale is sufficiently high relative to the maximum scale, power management module 128 may adjust the power consumption of router 110 by increasing a clock frequency and/or onlining one or more components of router 110. If neither condition exists, power management module might not perform any adjustments to the power consumption of router 110 (NO path from 403).

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The disclosures of all publications, patents, and patent applications referred to herein are hereby incorporated by reference. To the extent that any material that is incorporated by reference conflicts with the present disclosure, the present disclosure shall control.

For ease of illustration, only a limited number of devices are shown within the Figures and/or in other illustrations referenced herein. However, techniques in accordance with one or more aspects of the present disclosure may be performed with many more of such systems, components, devices, modules, and/or other items, and collective references to such systems, components, devices, modules, and/or other items may represent any number of such systems, components, devices, modules, and/or other items.

The Figures included herein each illustrate at least one example implementation of an aspect of this disclosure. The scope of this disclosure is not, however, limited to such implementations. Accordingly, other example or alternative implementations of systems, methods or techniques described herein, beyond those illustrated in the Figures, may be appropriate in other instances. Such implementations may include a subset of the devices and/or components included in the Figures and/or may include additional devices and/or components not shown in the Figures.

The detailed description set forth above is intended as a description of various configurations and is not intended to represent the only configurations in which the concepts described herein may be practiced. The detailed description includes specific details for the purpose of providing a sufficient understanding of the various concepts. However, these concepts may be practiced without these specific details. In some instances, well-known structures and components are shown in block diagram form in the referenced figures in order to avoid obscuring such concepts.

Accordingly, although one or more implementations of various systems, devices, and/or components may be described with reference to specific Figures, such systems, devices, and/or components may be implemented in a number of different ways. For instance, one or more devices illustrated herein as separate devices may alternatively be implemented as a single device; one or more components illustrated as separate components may alternatively be implemented as a single component. Also, in some examples, one or more devices illustrated in the Figures herein as a single device may alternatively be implemented as multiple devices; one or more components illustrated as a single component may alternatively be implemented as multiple components. Each of such multiple devices and/or components may be directly coupled via wired or wireless communication and/or remotely coupled via one or more networks. Also, one or more devices or components that may be illustrated in various Figures herein may alternatively be implemented as part of another device or component not shown in such Figures. In this and other ways, some of the functions described herein may be performed via distributed processing by two or more devices or components.

Further, certain operations, techniques, features, and/or functions may be described herein as being performed by specific components, devices, and/or modules. In other examples, such operations, techniques, features, and/or functions may be performed by different components, devices, or modules. Accordingly, some operations, techniques, features, and/or functions that may be described herein as being attributed to one or more components, devices, or modules may, in other examples, be attributed to other components, devices, and/or modules, even if not specifically described herein in such a manner.

Although specific advantages have been identified in connection with descriptions of some examples, various other examples may include some, none, or all of the enumerated advantages. Other advantages, technical or otherwise, may become apparent to one of ordinary skill in the art from the present disclosure. Further, although specific examples have been disclosed herein, aspects of this disclosure may be implemented using any number of techniques, whether currently known or not, and accordingly, the present disclosure is not limited to the examples specifically described and/or illustrated in this disclosure.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, or optical disk storage, magnetic disk storage, or other magnetic storage devices, flash memory, or any other medium that can be used to store desired program code in the form of instructions or data structures and that can be accessed by a computer. Also, any connection may properly be termed a computer-readable medium. For example, if instructions are transmitted from a website, server, or other remote source using a wired (e.g., coaxial cable, fiber optic cable, twisted pair) or wireless (e.g., infrared, radio, and microwave) connection, then the wired or wireless connection is included in the definition of medium. It should be understood, however, that computer-readable storage media and data storage media do not include connections, carrier waves, signals, or other transient media, but are instead directed to non-transient, tangible storage media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including, to the extent appropriate, a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Therefore, from one perspective, there have been described techniques for improving and/or reducing the power consumption by a router or other computing system. For example, this disclosure describes determining, by a computing system, an expected scale of a network device relative to a maximum scale of the network device; and adjusting, by the computing system and based on a comparison of the expected scale to the maximum scale, power consumption of the network device.

Further examples are set out in the following numbered clauses.

Clause 1. A method comprising: determining, by a computing system, an expected scale of a network device relative to a maximum scale of the network device; and adjusting, by the computing system and based on a comparison of the expected scale to the maximum scale, power consumption of the network device.

Clause 2. The method of clause 1, further comprising: determining, by the computing system, an updated expected scale of the network device; and further adjusting, by the computing system and based on the updated expected scale, power consumption of the network device.

Clause 3. The method of clause 1 or 2, wherein adjusting power consumption includes:
offlining one or more CPU cores in the network device.

Clause 4. The method of any of clauses 1-3, wherein adjusting power consumption includes: reducing CPU core frequency in the network device.

Clause 5. The method of any of clauses 1-4, wherein adjusting power consumption includes: offlining one or more memory modules in the network device.

Clause 6. The method of any of clauses 1-5, wherein the computing system is included within the network device.

Clause 7. The method of any of clauses 1-6, wherein the network device is a router.

Clause 8. The method of clause 7, wherein determining the expected scale includes: applying a machine learning model to predict scale based on the router's scale and switching operations, CPU, core, and memory utilization, and/or a configuration associated with the router.

Clause 9. A method comprising: determining, by a computing system, an expected scale of a network device, wherein the network device comprises a plurality of hardware components; comparing, by the computing system, the expected scale to a maximum scale of the network device; and adjusting, by the computing system and based on the comparison, power consumption of the network device, wherein adjusting power consumption includes offlining one or more of the hardware components of the network device.

Clause 10. The method of clause 9, wherein the hardware components include a plurality of CPU cores, and wherein adjusting power consumption of the network device further includes: reducing a frequency at which at least one of the CPU cores are clocked.

Clause 11. The method of clause 9 or 10, wherein the hardware components include a plurality of CPU cores, and wherein offlining one or more the hardware components includes: offlining one of the CPU cores in the network device.

Clause 12. The method of any of clauses 9-11, wherein the hardware components include a plurality of memory modules, and wherein offlining one or more the hardware components includes: offlining one or more of the memory modules in the network device.

Clause 13. The method of any of clauses 9-12, further comprising: determining, by the computing system, an updated expected scale of the network device; and further adjusting, by the computing system and based on the updated expected scale, power consumption of the network device.

Clause 14. The method of clause 13, wherein further adjusting power consumption includes: onlining one or more of the hardware components.

Clause 15. The method of any of clauses 9-14, wherein the computing system is included within the network device.

Clause 16. The method of any of clauses 9-15, wherein the network device is a router, and wherein determining the expected scale of the router includes: determining information about convergence capabilities of the router.

Clause 17. The method of clause 16, wherein determining the expected scale includes: applying a machine learning model to predict the expected scale based on at least one of a configuration associated with the router, specifications associated with the router, switching operations, CPU utilization, core utilization, or memory utilization.

Clause 18. A system comprising a storage device; and processing circuitry having access to the storage device and configured to: determine an expected scale of a network device, wherein the network device comprises a plurality of hardware components, compare the expected scale to a maximum scale of the network device, and adjust, based on the comparison, power consumption of the network device, wherein to adjust power consumption, the processing circuitry is further configured to offline one or more of the hardware components of the network device.

Clause 19. The system of clause 18, wherein the hardware components include a plurality of CPU cores, and wherein to adjust power consumption of the network device, the processing circuitry is further configured to: reduce a frequency at which at least one of the CPU cores are clocked.

Clause 20. The system of clause 18 or 19, wherein the hardware components include a plurality of CPU cores, and wherein to offline one or more the hardware components, the processing circuitry is further configured to: offline one of the CPU cores in the network device.

Clause 21. The system of any of clauses 18-20, wherein the hardware components include a plurality of memory modules, and wherein to offline one or more the hardware components, the processing circuitry is further configured to: offline one or more of the memory modules in the network device.

Clause 22. The system of any of clauses 18-21, wherein the processing circuitry is further configured to: determine an updated expected scale of the network device; and further adjust, based on the updated expected scale, power consumption of the network device.

Clause 23. The system of clause 23, wherein to further adjust power consumption, the processing circuitry is further configured to: online one or more of the hardware components.

Clause 24. The system of any of clauses 18-23, wherein the system is included within the network device.

Clause 25. The system of any of clauses 18-24, wherein the network device is a router, and wherein to determine the expected scale, the processing circuitry is further configured to: determine information about convergence capabilities of the router.

Clause 26. The system of clause 25, wherein to determine the expected scale, the processing circuitry is further configured to: apply a machine learning model to predict the expected scale based on at least one of the router's configuration, construction, switching operations, CPU utilization, core utilization, or memory utilization.

Clause 27. Computer-readable media comprising instructions that, when executed, configure processing circuitry to: determine an expected scale of a network device, wherein the network device comprises a plurality of hardware components; compare the expected scale to a maximum scale of the network device; and adjust, based on the comparison, power consumption of the network device, wherein to adjust power consumption, the processing circuitry is further configured to offline one or more of the hardware components of the network device.

Clause 28. The computer-readable media of clause 27, further comprising instructions that, when executed, further cause the processing circuitry to: determine an updated expected scale of the network device; and further adjust, based on the updated expected scale, power consumption of the network device.

## Claims

1. A method comprising:
determining, by a computing system, an expected scale of a network device, wherein the network device comprises a plurality of hardware components;
comparing, by the computing system, the expected scale to a maximum scale of the network device; and
adjusting, by the computing system and based on the comparison, power consumption of the network device, wherein adjusting power consumption includes offlining one or more of the hardware components of the network device.

2. The method of claim 1, wherein the hardware components include a plurality of CPU cores, and wherein adjusting power consumption of the network device further includes:
reducing a frequency at which at least one of the CPU cores are clocked.

3. The method of any of claims 1-2, wherein the hardware components include a plurality of CPU cores, and wherein offlining one or more the hardware components includes:
offlining one of the CPU cores in the network device.

4. The method of any of claims 1-3, wherein the hardware components include a plurality of memory modules, and wherein offlining one or more the hardware components includes:
offlining one or more of the memory modules in the network device.

5. The method of any of claims 1-4, further comprising:
determining, by the computing system, an updated expected scale of the network device; and
further adjusting, by the computing system and based on the updated expected scale, power consumption of the network device.

6. The method of claim 5, wherein further adjusting power consumption includes:
onlining one or more of the hardware components.

7. The method of any of claims 1-6,
wherein the computing system is included within the network device.

8. The method of any of claims 1-7, wherein the network device is a router, and wherein determining the expected scale of the router includes:
determining information about convergence capabilities of the router.

9. The method of claim 8, wherein determining the expected scale includes:
applying a machine learning model to predict the expected scale based on at least one of a configuration associated with the router, specifications associated with the router, switching operations, CPU utilization, core utilization, or memory utilization.

10. A system comprising
a storage device; and
processing circuitry having access to the storage device and configured to:
determine an expected scale of a network device, wherein the network device comprises a plurality of hardware components,
compare the expected scale to a maximum scale of the network device, and
adjust, based on the comparison, power consumption of the network device, wherein to adjust power consumption, the processing circuitry is further configured to offline one or more of the hardware components of the network device.

11. The system of claim 10, wherein the hardware components include a plurality of CPU cores, and wherein to adjust power consumption of the network device, the processing circuitry is further configured to:
reduce a frequency at which at least one of the CPU cores are clocked.

12. The system of any of claims 10-11, wherein the hardware components include a plurality of CPU cores, and wherein to offline one or more the hardware components, the processing circuitry is further configured to:
offline one of the CPU cores in the network device.

13. The system of any of claims 10-12, wherein the hardware components include a plurality of memory modules, and wherein to offline one or more the hardware components, the processing circuitry is further configured to:
offline one or more of the memory modules in the network device.

14. The system of any of claims 10-13, wherein the processing circuitry is further configured to:
determine an updated expected scale of the network device; and
further adjust, based on the updated expected scale, power consumption of the network device.

15. A computer-readable medium comprising instructions which, when executed by one or more programmable processors, cause one or more programmable processors to perform the method of any of claims 1-9.
